# EUROPÄISCHE PATENTSCHRIFT

(11) **EP 3 685 052 B1**
(45) Veröffentlichungstag und Bekanntmachung des Hinweises auf die Patenterteilung: **22.02.2023**
(21) Anmeldenummer: 18769344.5
(22) Anmeldetag: 12.09.2018
(51) Int. Cl.: F16B 5/04, F16B 19/05, B29C 65/60

(54) **NIETVERBINDUNG UND VERFAHREN ZUM HERSTELLEN EINER NIETVERBINDUNG**
RIVET CONNECTION AND METHOD FOR PRODUCING A RIVET CONNECTION
ASSEMBLAGE PAR RIVET ET PROCÉDÉ DE FABRICATION D'UN ASSEMBLAGE PAR RIVET

(30) Priorität: 21.09.2017 DE 102017216742
(43) Veröffentlichungstag der Anmeldung: 29.07.2020
(73) Patentinhaber: Continental Automotive Technologies GmbH, 30165 Hannover (DE)
(72) Erfinder: MURMANN, Udo, 64859 Eppertshausen (DE); FRIEDRICH, Sven, 09126 Chemnitz (DE); BRÜCKNER, Eric, 09126 Chemnitz (DE)
(74) Vertreter: Continental Corporation
(86) Internationale Anmeldenummer: PCT/EP2018/074594
(87) Internationale Veröffentlichungsnummer: WO 2019/057581

(56) Entgegenhaltungen:
- EP-A1- 0 212 656
- EP-A2- 0 322 999
- EP-A2- 1 180 405
- DE-C1- 3 932 294
- US-A- 3 544 143

## Beschreibung

Die Erfindung betrifft eine Nietverbindung und ein Verfahren zum Herstellen einer Nietverbindung. Aus dem Stand der Technik sind Nietverbindungen zum Verbinden eines ersten Bauteils mit einem zweiten Bauteil bekannt, bei dem ein rohrförmiger Niet mit einem innenliegenden Stift durch Öffnungen der zu verbindenden Bauteile gesteckt ist und durch ein Ziehen an dem Stift der rohrförmige Niet außerhalb der zu verbindenden Bauteile verformt wird und so die beiden Bauteile miteinander verbindet. Diese Art von Niet ist als so genannte Blindniete bekannt. Weiterhin sind Nietverbindungen bekannt, bei dem rohrförmige runde Niete aus Kunststoff durch jeweils eine Öffnung eines ersten und eine Öffnung eines zweiten Bauteils gesteckt werden und die beiden Enden des Niet jeweils zu einem Nietkopf verformt sind. Hierbei kann einer der Nietköpfe schon vor der Montage des Niet durch die beiden Öffnungen geformt sein, während der zweite Nietkopf nach dem Durchstecken des Niet durch die beiden Öffnungen der zu verbindenden Bauteile durch ein Erhitzen des Rohrendes und Aufsetzen eines Umformwerkzeuges verformt wird und so die zu verbindenden Bauteile miteinander verbunden sind. Derartige Nietverbindungen sind aus der DE 39 32 294 C1 und der US 3, 544, 143 bekannt.

Nachteilig bei dieser Verformung des Rohrendes zum Nietkopf ist es, dass der Nietkopf unter Umständen ungenügend an das verbliebene Rohr angebunden ist. Es kann eine Bindenaht entstehen, die sich negativ auf Festigkeit, Optik und Funktion auswirkt. Die Ursache hierfür liegt in der geringen Schmelzschichtdicke bei gleichzeitig hoher Schergeschwindigkeit. Es gelingt nicht, das gesamte Nietkopfvolumen ausreichend in einen plastischen Zustand zu versetzen und diese kritischen Bereiche zu vermeiden. Aufgabe der Erfindung ist es daher, eine Nietverbindung und ein Verfahren zum Herstellen der Nietverbindung anzugeben, die die vorgenannten Nachteile vermeidet. Diese Aufgabe wird gelöst durch eine Nietverbindung mit den Merkmalen des Patentanspruchs 1 und einem Nietverfahren mit den Merkmalen des Patentanspruchs 7. Durch die seitliche Energieeinführung in die Seitenwand kann das rohrförmige Bauteil direkt oberhalb des zweiten Bauteils plastifiziert werden so dass beim Stauchen das plastifizierte Material fließen kann und den ausgewölbten Bereich bilden kann, ohne dass Scherkannten entstehen. Durch den oder die Laser wird direkt keine Energie in das zweite Bauteil eingeleitet. Dadurch, dass die Energie des oder der Laser in das das rohrförmige Bauteil direkt von der Seite in die Seitenwand eingeleitet wird, wird das zweite Bauteil weitgehend geschont. Nur Teile des ausgewölbten Materials geben einen Teil der in ihnen durch die Plastifizierung gespeicherten Energie beim Erkalten an das zweite Bauteil ab. Somit ist die Belastung des zweiten Bauteils durch Wärmeneintrag wesentlich geringer als bei einer Infrarotbeheizung des Nietendes. Dies ist insbesondere von Vorteil, wenn das zweite Bauteil als Leiterplatte ausgebildet ist, auf der elektronische und elektromechanische Bauteile angeordnet sind. Das erste Bauteil kann beispielsweise als elektromechanisches Bauteil ausgestaltet sein, welches auf einer Leiterplatte als zweites Bauteil durch die erfindungsgemäße Nietverbindung befestigt ist.

Bei dem erfindungsgemäßen Verfahren wird die Seitenwand des Niet seitlich oberhalb des zu verbindenden Werkstückes von der Seite her an seinem Umfang mittels mindestens einem Laser bis zur Plastifizierung erhitzt und dann von oben her, also von dem zweiten Ende des rohrförmigen Bauteils in Richtung der dritten Oberfläche mittels eines Umformwerkzeugs gestaucht.

Wenn der Kunststoff Rußpartikel enthält kann die Energie des oder der Laser besonders gut absorbiert werden und die Plastifizierung beschleunigt werden.

Wenn das rohrförmige Bauteil als Teil des ersten Bauteils ausgestaltet ist wird der Montageaufwand erheblich reduziert.

Der Niet kann aber auch als eigenes Bauteil mit nur dieser Funktion ausgestaltet sein. Dann weist das rohrförmige Bauteil oder eine Verlängerung des rohrförmigen Bauteils an seinem ersten Ende eine Ausweitung auf, die vorteilhafterweise schon bei der Produktion des Niet ausgeformt wird. Weiterhin weist dann das erste Bauteil noch eine vierte Oberfläche auf, wobei zwischen der ersten Oberfläche und der vierten Oberfläche eine zweite Öffnung vorhanden ist, durch die das rohrförmige Bauteil oder eine Verlängerung des Rohrförmigen Bauteils geführt ist.

Das rohrförmige Bauteil und die erste Öffnung bzw. erste und zweite Öffnung sind jeweils vorteilhafterweise rund ausgestaltet, da sich dann besonders einfach eine gleichmäßige Plastifizierung erreichen lässt. Es sind aber auch ovale oder vieleckige Ausgestaltungen möglich. Dadurch wird vorteilhafterweise ein Verdrehschutz auch bei nur einer vorhandenen Nietverbindung ermöglicht.

Wenn das Umformwerkzeug einen Dorn aufweist, der im Hohlraum des rohrförmigen Bauteils geführt ist, wird verhindert, dass beim Stauchen das plastifizierte Material in den Hohlraum eindringen kann und so die Auswölbung des rohrförmigen Bauteils unterstützt wird. Dies wird besonders effektiv verhindert, wenn der Dorn bereits vor dem Erhitzen in den Hohlraum eingeführt wird.

Dadurch, dass Laser und Niet relativ zueinander bewegt werden kann die Erhitzung besonders homogen erfolgen.

Wenn mindestens zwei Laser vorhanden sind lässt sich die erforderliche Zeit zum Erhitzen der rohrförmigen Bauteile reduzieren. Hierdurch kann auch die Qualität der Plastifizierung und somit der Nietverbindung insgesamt erhöhen. Außerdem wird die erforderliche relative Bewegung zueinander reduziert. So müssen bei zwei vorhandenen Lasern, zwischen denen der Niet angeordnet ist, der Niet bzw. die Laser nur um 180° relativ zu den Lasern bzw. zu dem Niet gedreht werden. Weiterhin ist es möglich, die Strahlen eines oder mehrerer Laser über Spiegelsysteme, insbesondere Parabolische Spiegel so zu lenken, dass das rohrförmige Bauteil entlang seines gesamten Umfangs plastifiziert werden kann. Bei Verwendung von mindestens zwei sogenannten Linienlasern kann auf eine relative Bewegung zwischen dem rohrförmigen Bauteil und den Lasern verzichtet werden. Beim Einsatz von z.B. zwei sogenannten Linienlasern können jeweils 180°des Umfangs des rohrförmigen Bauteils bestrahlt und erhitzt werden, so dass der volle Umfang des rohrförmigen Bauteils plastifiziert wird.

Wenn das rohrförmige Bauteil als Teil des ersten Bauteils ausgestaltet ist, lässt sich der Montageaufwand für die Nietverbindung reduzieren, da mindestens ein Bauteil oder bei Bauteilen mit mehreren Nietverbindungen mehrere Bauteile weniger benötigt werden und auch der Nietvorgang als solcher vereinfacht wird.

Die Erfindung wird nachfolgend anhand der Figuren näher erläutert. Es zeigen:
- Figur 1: einen Schnitt durch zu verbindende Bauteile, die bereits zusammengesteckt sind
- Figur 2: einen Schnitt der Bauteile aus Figur 1 im vernieteten Zustand
- Figur 3: einen Schnitt durch eine leichte Variation der Bauteile aus Figur 1
- Figur 4: einen Schnitt durch die Bauteile aus Figur 3 im vernieteten Zustand
- Figur 5: eine Prinzip Skizze eines erfindungsgemäßen Ausführungsbeispiels von zwei zu verbindenden Bauteilen beim erfindungsgemäßen Erhitzen mittels zwei Lasern
- Figur 6: eine Prinzip Skizze des Ausführungsbeispiels aus Figur 5 nach erfolgtem Stauchen des plastifizierten Niets
- Figur 7: einen Schnitt durch ein weiteres erfindungsgemäßes Ausführungsbeispiels im vernieteten Zustand

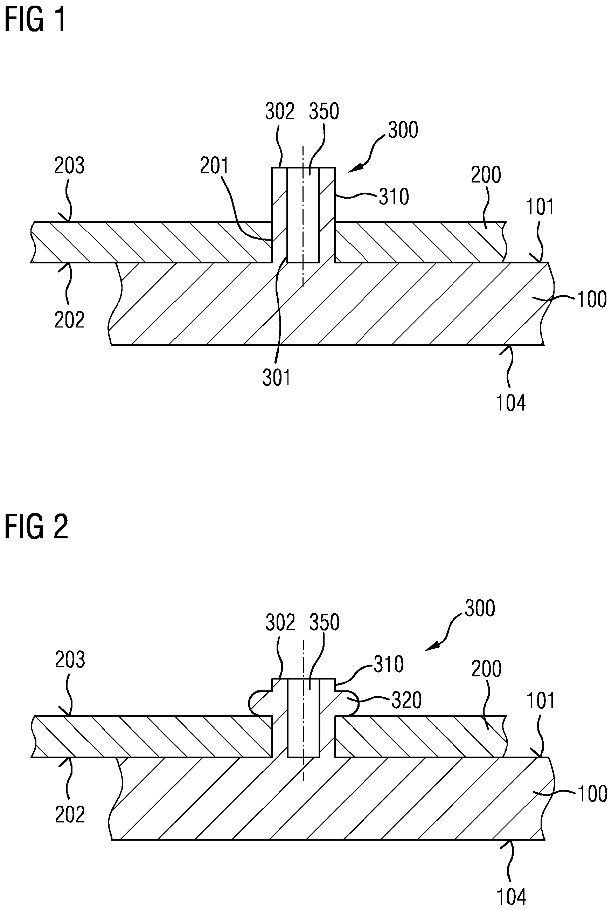

In Figur 1 erkennt man ein erstes Bauteil 100 und ein zweites Bauteil 200. Ein rohrförmiges Bauteil 300 ist als Teil des ersten Bauteils 100 ausgebildet. Das rohrförmige Bauteil ist in seinem Querschnitt ringförmig ausgebildet, eine Seitenwand 310 umschließt einen Hohlraum 350. Das Rohrförmige Bauteil 300 weist ein erstes Ende 301 und ein zweites Ende 302 auf, wobei das zweite Ende 302 am weitesten von einer r ersten Oberfläche 101 des ersten Bauteils 100 entfernt ist. Das erste Bauteil weist weiterhin noch eine vierte Oberfläche 104 auf, die parallel zur ersten Oberfläche 101 liegt, wobei die Parallelität nicht unbedingt erforderlich ist. Das zweite Bauteil weist eine zweite Oberfläche 202, eine dritte Oberfläche 203 und eine erste Öffnung 201 auf, durch die das rohrförmige Bauteil 300 gesteckt ist, so dass die erste Öffnung 201 in Figur 1 von dem rohrförmigen Bauteil 300 verdeckt wird, wobei der Durchmesser der ersten Öffnung vorteilhafterweise etwas größer ist als der Außendurchmesser des rohrförmigen Bauteils, so dass sich zwischen diesen Bauteilen vorteilhafterweise eine Spielpassung ergibt. Das zweite Bauteil 200 liegt mit seiner zweiten Seite 202 an der der ersten Seite 101 des ersten Bauteils 100 an.

Figur 2 unterscheidet sich von Figur 1 dadurch, dass die Seitenwand 310 des rohrförmigen Bauteils 300 an seiner Wand 310 entlang seines Umfangs oberhalb der dritten Oberfläche 203 des ersten erhitzt wurde und dann von oben derart gestaucht wurde, dass sich ein ausgewölbter Bereich 320 bildet, der teilweise die dritte Oberfläche 203 des zweiten Bauteils berührt und sich das zweite Ende 302 des rohrförmigen Bauteils 300 nun näher an der dritten Oberfläche des zweiten Bauteils 200 befindet.

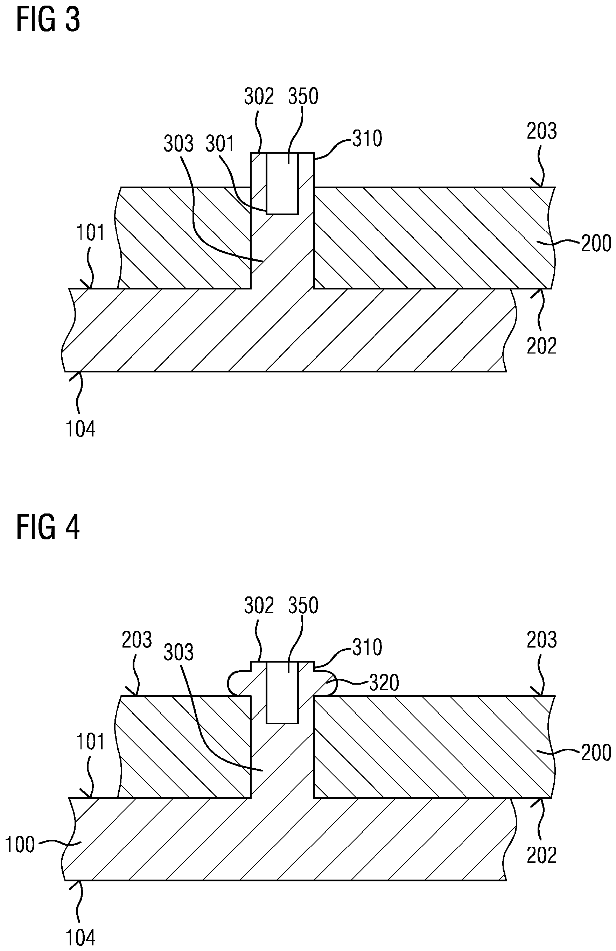

Figur 3 unterscheidet sich von Figur 1 dadurch, dass das zweite Bauteil 200 eine größere Höhe aufweist und das rohrförmige Bauteil entsprechend angepasst ist, damit es noch die dritte Oberfäche des zweiten Bauteils 200 überragt. Das rohrförmige Bauteil ist über eine Verlängerung 303 mit dem ersten Bauteil 100 verbunden. Grundsätzlich wäre es auch möglich, das rohrförmige Bauteil bis zur ersten Oberfläche 101 des ersten Bauteils auszugestalten, auf die Verformbarkeit des rohrförmigen Bauteils oberhalb der dritten Oberfläche des zweiten Bauteils hat dies keinen Einfluss. Die Benutzung der Verlängerung 303 macht die Verbindung jedoch stabiler und einfacher herstellbar, da der Hohlraum 350 nicht übermäßig groß ausfällt.

In Figur 4 ist der die Wand 310 zum ausgewölbten Bereich 320 geformt, so dass die Nietverbindung zwischen dem ersten Bauteil 100 und dem zweiten Bauteil 200 realisiert ist. Die Ausführungen zu Figur 2 gelten entsprechend.

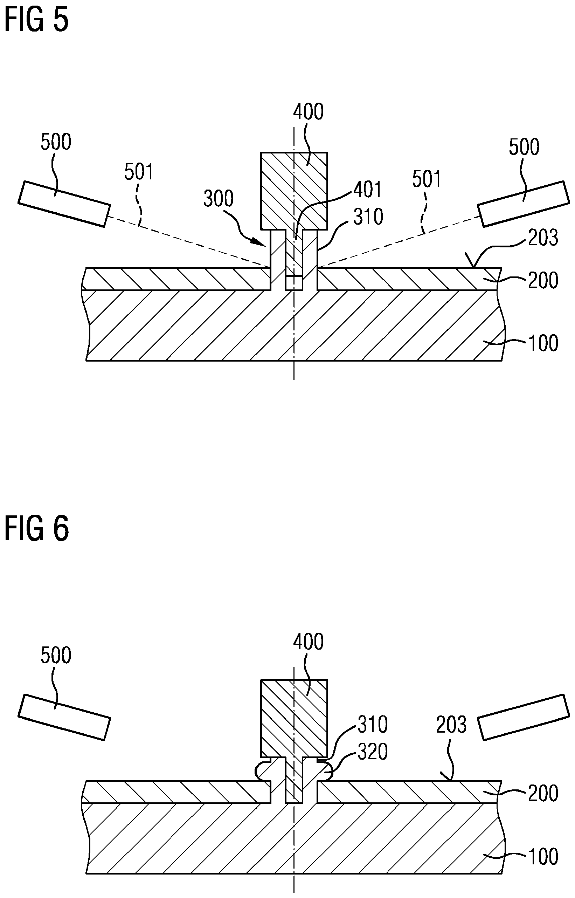

In Figur 5 erkennt man neben dem ersten Bauteil 100 mit rohrförmigen Bauteil 300 und dem zweiten Bauteil 200 mit dritter Oberfläche 203 ein Umformwerkzeug 400 mit Dorn 401 und zwei Laser 500. Die Laser 500 senden Laserstrahlen 501 gegen die Seitenwand 310 des rohrförmigen Bauteils 300 oberhalb der dritten Oberfläche 203 des zweiten Bauteils 200. Hierbei werden die Laser relativ zu dem rohrförmigen Bauteil 300 verdreht, dass die Seitenwand 310 entlang ihres gesamten Umfangs solange erhitzt wird, bis ein Bereich der Seitenwand 310 oberhalb der dritten Oberfläche des zweiten Bauteils 200 und unterhalb des zweiten Endes 302 des rohrförmigen Bauteil vollständig plastifiziert ist und dann wie in Figur 6 dargestellt durch ein Bewegen des Umformwerkzeugs 400 in Richtung der der dritten Oberfläche des zweiten Bauteils 200 die Seitenwand staucht, so dass sich der ausgewölbte Bereich 320 ergibt, der die dritte Oberfläche 203 des zweiten Bauteils 200 teilweise berührt und nach dem Erkalten des ausgewölbten Bereichs die Nietverbindung realisiert. Bei dem in Figuren 5, 6 dargestellten Ausführungsbeispiel mit zwei Lasern 500 müssen die Laser relativ zum rohrförmigen Bauteil 300 um 180° verdreht werden, um den gesamten Umfang der Seitenwand 310 des rohrförmigen Bauteils 300 plastifizieren zu können, bei nur einem vorhandenen Laser ist ein relatives Verdrehen um 360° erforderlich. Die Verwendung eines einzigen Lasers erfordert aber eine längere Zeit, bis die Seitenwand 310 im Bereich oberhalb des zweiten Bauteils 200 plastifiziert ist. Es ist auch möglich, den oder die Laser in ihrer Position zu belassen und das rohrförmige Bauteil 300 entsprechend zu drehen, dass die Seitenwand 310 hinreichend plastifiziert ist. Bei Verwendung von mindestens zwei sogenannten Linienlasern kann auf eine relative Bewegung zwischen dem rohrförmigen Bauteil 300 und den Lasern 500 verzichtet werden. Beim Einsatz von z.B. zwei sogenannten Linienlasern können jeweils 180°des Umfangs des rohrförmigen Bauteils bestrahlt und erhitzt werden, so dass der volle Umfang des rohrförmigen Bauteils plastifiziert wird. Man kann in den Figuren 2, 4 und 6 erkennen, dass ein Teil der Seitenwand 310 am zweiten Ende 302 des rohrförmigen Bauteils 300 ihre ursprüngliche Form behält, da dieser Bereich nicht plastifiziert wurde. Der Dorn 401 des Umformwerkzeugs 400 verhindert, dass vor und während des Stauchvorgangs plastifiziertes Material der Seitenwand 310 in den Hohlraum 350 gelangt. So wird das plastifizierte Material vollständig zur Ausbildung des ausgewölbten Bereichs 320 verwendet.

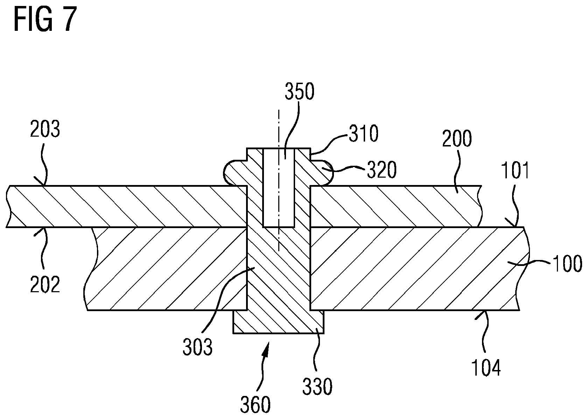

Die Nietverbindung in Figur 7 unterscheidet sich von der Nietverbindung in Figur 4 dadurch, dass das rohrförmige Bauteil und die Verlängerung als separater Hohlniet 360 ausgestaltet sind, der noch eine Ausweitung 330 aufweist. Damit der separate Hohlniet 360 das erste und zweite Bauteil 100, 200 miteinander verbinden kann , weist das erste Bauteil eine zweite Öffnung auf, wobei der separate Hohlniet durch die erste Öffnung 201 des zweiten Bauteils und die zweite Öffnung des ersten Bauteils 100 gesteckt wird, bis die Ausweitung 330 die vierte Oberfläche des ersten Bauteils berührt und dann die Vernietung stattfindet, wie zuvor zu den Figuren 1 bis 6 beschrieben.

## Patentansprüche

1. Nietverbindung aufweisend einen Hohlniet, wobei der Hohlniet aus Kunststoff besteht und ein erstes Bauteil (100) mit einem zweiten Bauteil (200) verbindet, wobei das erste Bauteil eine erste Oberfläche(101) und das zweite Bauteil eine zweite und dritte Oberfläche (202, 203) aufweist, wobei die erste Oberfläche (101) des ersten Bauteils (100)und die zweite Oberfläche(202) des zweiten Bauteils(200) aneinander liegen und das zweite Bauteil(200) eine erste Öffnung(201) zwischen der zweiten und dritten Oberfläche (202, 203) aufweist, wobei der Hohlniet ein rohrförmiges Bauteil (300) mit einer Seitenwand (310), einem Hohlraum (350) und einem ersten Ende (301) und einem zweiten Ende (302) aufweist, wobei ein Teil des rohrförmigen Bauteils(300) in der ersten Öffnung (201)des zweiten Bauteils (200) angeordnet ist und das rohrförmige Bauteil (300) mit seinem zweiten Ende (302) das zweite Bauteil (200) überragt, **dadurch gekennzeichnet, dass** die Seitenwand (310) des rohrförmigen Bauteils (300) entlang ihres Umfangs benachbart zu der ersten Öffnung (201) oberhalb der dritten Oberfläche (203) des zweiten Bauteils (200) und nur unterhalb des zweiten Endes (302) von der Seite her mittels eines Laser erhitzt ist und gestaucht ist und so einen ausgewölbten Bereich (320)ausbildet,
dass ein Teil des ausgewölbten Bereichs (320) die dritte Oberfläche (203) des zweiten Bauteils (200)berührt, wobei die Seitenwand (310) am zweiten Ende (302) des rohrförmigen Bauteils (300) nicht plastifiziert ist.

2. Nietverbindung nach Patentanspruch 1, **dadurch gekennzeichnet**, das s der Kunststoff Rußpartikel aufweist.

3. Nietverbindung nach einem der vorstehenden Patentansprüche, **dadurch gekennzeichnet**, das s das rohrförmige Bauteil (300)als Teil des ersten Bauteils (100)ausgestaltet ist.

4. Nietverbindung nach Patentanspruch 1 oder 2, **dadurch gekennzeichnet**, das s das rohrförmige Bauteil (300) an seinem ersten Ende (301) zu einer Ausweitung (330) ausgeweitet ist oder mit einer Ausweitung (330) über eine Verlängerung (303)verbunden ist, dass das erste Bauteil (100) eine vierte Oberfläche(104) aufweist, wobei das erste Bauteil (100) eine zweite Öffnung aufweist, die von der ersten Oberfläche(101) zur vierten Oberfläche (104)führt, dass das rohrförmige Bauteil (300) oder die Verlängerung (303) des rohrförmigen Bauteils (300) durch die zweite Öffnung des ersten Bauteils (100) geführt ist und die Ausweitung (330) die vierte Oberfläche (104) des ersten Bauteils (100)berührt.

5. Nietverbindung nach einem der vorstehenden Patentansprüche 1-3, **dadurch gekennzeichnet, dass** das rohrförmige Bauteil (300)und die erste Öffnung (201)des zweiten Bauteils (200)jeweils rund, oval oder vieleckig ausgestaltet sind.

6. Nietverbindung nach Patentanspruch 4, **dadurch gekennzeichnet, dass** das rohrförmige Bauteil (300), die zweite Öffnung (102)des ersten Bauteils (100) und die erste Öffnung (201) des zweiten Bauteils (200) jeweils rund, oval oder vieleckig ausgestaltet sind.

7. Verfahren zum Verbinden eines ersten Bauteiles (100) mit einem zweiten Bauteil (200) mittels eines Niet, wobei der Niet aus Kunststoff hergestellt ist und ein rohrförmiges Bauteil (300) aufweist, wobei das erste Bauteil (100) eine erste Oberfläche (101)und das zweite Bauteil (200) eine zweite und dritte Oberfläche (202, 203) aufweist, wobei die erste Oberfläche (101) des ersten Bauteils (100) und die zweite Oberfläche (202) des zweiten Bauteils (200) aneinander liegen und das zweite Bauteil(200) eine erste Öffnung (201) zwischen der zweiten und dritten Oberfläche (202, 203) aufweist, wobei der Hohlniet ein rohrförmiges Bauteil (300) mit einer Seitenwand (310), einem Hohlraum (350) und einem ersten Ende (301) und einem zweiten Ende (302) aufweist, dass das rohrförmige Bauteil (300) durch die erste Öffnung (201) gesteckt wird und so mit seinem zweiten Ende (302) die dritte Oberfläche(203) des zweiten Bauteils (200) überragt, **dadurch gekennzeichnet, dass** die Seitenwand (310) des rohrförmigen Bauteils (300) oberhalb und benachbart zu der dritten Oberfläche (103) des ersten Bauteils (100) und nur unterhalb des zweiten Endes (302) und mittels mindestens eines Laser (500) von der Seite her entlang ihres Umfangs bis zu Plastifizierung erhitzt wird und dann das rohrförmige Bauteil (300) von seinem zweiten Ende (302) her mittels eines Umformwerkzeuges (400) derart gestaucht wird, dass das gestauchte Material des Niet einen ausgewölbten Bereich (320) bildet, der die dritte Oberfläche (203) des zweiten Bauteils (200) teilweise berührt und die Seitenwand (310)am zweiten Ende (302) des rohrförmigen Bauteils (300) ihre ursprüngliche Form behält.

8. Verfahren nach Patentanspruch 7,
**dadurch gekennzeichnet, dass** der Kunststoff Rußpartikel enthält.

9. Verfahren nach Patentanspruch 7 oder 8, **dadurch gekennzeichnet, dass** das Umformwerkzeug (400) einen Dorn (401) aufweist, der im Hohlraum (350) des Rohrförmigen Bauteils (300) geführt wird.

10. Verfahren nach Patentanspruch 9, **dadurch gekennzeichnet, dass** der Dorn (401) vor dem Erhitzen in den Hohlraum (350) des rohrförmigen Bauteils (300) eingeführt wird.

11. Verfahren nach einem der Patentansprüche 7 bis 10, **dadurch gekennzeichnet, dass** der Laser (500) und der Niet relativ zueinander bewegt werden.

12. Verfahren nach einem der Patentansprüche 7 bis 11,
**dadurch gekennzeichnet, dass** mindestens zwei Laser (500) pro Niet zum Plastifizieren verwendet werden.

13. Verfahren nach einem der Patentansprüche 7 bis 12,
**dadurch gekennzeichnet, dass** das rohrförmige Bauteil (300) als Teil des ersten Bauteils (100) ausgestaltet ist.

14. Verfahren nach einem der Patentansprüche 7 bis 12,
**dadurch gekennzeichnet, dass** am ersten Ende (301)des rohrförmigen Bauteils (300) oder an einer Verlängerung(303) des rohrförmigen Bauteils (300)ein Nietkopf in Form eines ausgewölbten Bereichs (320) ausgebildet ist.

## Claims

1. Rivet connection having a hollow rivet, wherein the hollow rivet is composed of plastics material and connects a first component (100) to a second component (200), wherein the first component has a first surface (101) and the second component has a second and third surface (202, 203), wherein the first surface (101) of the first component (100) and the second surface (202) of the second component (200) bear on one another, and the second component (200) has a first opening (201) between the second and third surface (202, 203), wherein the hollow rivet has a tubular component (300) having a lateral wall (310), a cavity (350) and a first end (301) and a second end (302), wherein part of the tubular component (300) is disposed in the first opening (201) of the second component (200), and the tubular component (300) by way of the second end (302) thereof protrudes beyond the second component (200), **characterized in that** the lateral wall (310) of the tubular component (300), along the circumference thereof neighbouring the first opening (201) above the third surface (203) of the second component (200) and only below the second end (302), is heated from the side by means of a laser and compressed and thus configures an outwardly bulging region (320) such that part of the outwardly bulging region (320) contacts the third surface (203) of the second component (200), wherein the lateral wall (310) on the second end (302) of the tubular component (300) is not plasticized.

2. Rivet connection according to Patent Claim 1, **characterized in that** the plastics material comprises carbon black particles.

3. Rivet connection according to one of the preceding patent claims,
**characterized in that** the tubular component (300) is designed as part of the first component (100).

4. Rivet connection according to Patent Claim 1 or 2, **characterized in that** the tubular component (300) at the first end (301) thereof is widened so as to form an expansion (330), or by way of an extension (303) is connected to an expansion (330), **in that** the first component (100) has a fourth surface (104), wherein the first component (100) has a second opening which leads from the first surface (101) to the fourth surface (104), **in that** the tubular component (300) or the extension (303) of the tubular component (300) is guided through the second opening of the first component (100), and the expansion (330) contacts the fourth surface (104) of the first component (100).

5. Rivet connection according to one of preceding Patent Claims 1 to 3,
**characterized in that** the tubular component (300) and the first opening (201) of the second component (200) are in each case designed so as to be round, oval, or polygonal.

6. Rivet connection according to Patent Claim 4, **characterized in that** the tubular component (300), the second opening (102) of the first component (100), and the first opening (201) of the second component (200) are in each case designed so as to be round, oval or polygonal.

7. Method for connecting a first component (100) to a second component (200) by means of a rivet, wherein the rivet is produced from plastics material and has a tubular component (300), wherein the first component (100) has first surface (101), and the second component (200) has a second and third surface (202, 203), wherein the first surface (101) of the first component (100) and the second surface (202) of the second component (200) bear on one another, and the second component (200) has a first opening (201) between the second and third surface (202, 203), wherein the hollow rivet has a tubular component (300) having a lateral wall (310), a cavity (350) and a first end (301) and a second end (302), that the tubular component (300) is plug-fitted through the first opening (201) and by way of the second end (302) thereof protrudes beyond the third surface (203) of the second component (200), **characterized in that** the lateral wall (310) of the tubular component (300) above and neighbouring the third surface (103) of the first component (100) and only below the second end (302) and by means of at least one laser (500) along the circumference thereof is heated from the side until plastification, and the tubular component (300) from the second end (302) thereof by means of a forming tool (400) is then compressed in such a manner that the compressed material of the rivet forms an outwardly bulging region (320) which partially contacts the third surface (203) of the second component (200), and the lateral wall (310) on the second end (302) of the tubular component (300) maintains the original shape thereof.

8. Method according to Patent Claim 7, **characterized in that** the plastics material comprises carbon black particles.

9. Method according to Patent Claim 7 or 8, **characterized in that** the forming tool (400) has a mandrel (401) which is guided in the cavity (350) of the tubular component (300).

10. Method according to Patent Claim 9, **characterized in that** the mandrel (401) prior to heating is introduced into the cavity (350) of the tubular component (300).

11. Method according to one of Patent Claims 7 to 10, **characterized in that** the laser (500) and the rivet are moved relative to one another.

12. Method according to one of Patent Claims 7 to 11, **characterized in that** at least two lasers (500) are used per rivet for plastification.

13. Method according to one of Patent Claims 7 to 12, **characterized in that** the tubular component (300) is designed as part of the first component (100).

14. Method according to one of Patent Claims 7 to 12, **characterized in that** a rivet head in the form of an outwardly bulging region (320) is configured on the first end (301) of the tubular component (300), or on an extension (303) of the tubular component (300).

## Revendications

1. Assemblage par rivet présentant un rivet tubulaire, dans lequel le rivet tubulaire est constitué de matière plastique et assemble un premier élément structural (100) avec un deuxième élément structural (200), dans lequel le premier élément structural présente une première surface (101) et le deuxième élément structural présente une deuxième et une troisième surface (202, 203), dans lequel la première surface (101) du premier élément structural (100) et la deuxième surface (202) du deuxième élément structural (200) sont adjacentes l'une à l'autre, et le deuxième élément structural (200) présente une première ouverture (201) entre la deuxième et la troisième surface (202, 203), dans lequel le rivet tubulaire présente un élément structural tubulaire (300) pourvu d'une paroi latérale (310), d'une cavité (350) et d'une première extrémité (301) et d'une deuxième extrémité (302), dans lequel une partie de l'élément structural tubulaire (300) est disposée dans la première ouverture (201) du deuxième élément structural (200), et l'élément structural tubulaire (300) fait saillie du deuxième élément structural (200) avec sa deuxième extrémité (302),
**caractérisé**
**en ce que** la paroi latérale (310) de l'élément structural tubulaire (300) est chauffée et refoulée par le côté au moyen d'un laser le long de sa circonférence à côté de la première ouverture (201) au-dessus de la troisième surface (203) du deuxième élément structural (200) et uniquement au-dessous de la deuxième extrémité (302) et forme ainsi une zone bombée (320),
**en ce qu'**une partie de la zone bombée (320) entre en contact avec la troisième surface (203) du deuxième élément structural (200), la paroi latérale (310) n'étant pas plastifiée à la deuxième extrémité (302) de l'élément structural tubulaire (300).

2. Assemblage par rivet selon la revendication 1, **caractérisé en ce que** la matière plastique présente des particules de suie.

3. Assemblage par rivet selon l'une quelconque des revendications précédentes, **caractérisé en ce que** l'élément structural tubulaire (300) est configuré sous la forme du premier élément structural (100).

4. Assemblage par rivet selon la revendication 1 ou 2, **caractérisé en ce que** l'élément structural tubulaire (300) est élargi à sa première extrémité (301) en un élargissement (330) ou est relié à un élargissement (330) par l'intermédiaire d'un prolongement (303), **en ce que** le premier élément structural (100) présente une quatrième surface (104), dans lequel le premier élément structural (100) présente une deuxième ouverture qui mène de la première surface (101) à la quatrième surface (104), **en ce que** l'élément structural tubulaire (300) ou le prolongement (303) de l'élément structural tubulaire (300) passe par la deuxième ouverture du premier élément structural (100) et l'élargissement (330) entre en contact avec la quatrième surface (104) du premier élément structural (100).

5. Assemblage par rivet selon l'une quelconque des revendications précédentes 1 à 3, **caractérisé en ce que** l'élément structural tubulaire (300) et la première ouverture (201) du deuxième élément structural (200) présentent respectivement une configuration ronde, ovale ou polygonale.

6. Assemblage par rivet selon la revendication 4, **caractérisé en ce que** l'élément structural tubulaire (300), la deuxième ouverture (102) du premier élément structural (100) et la première ouverture (201) du deuxième élément structural (200) présentent respectivement une configuration ronde, ovale ou polygonale.

7. Procédé permettant d'assembler un premier élément structural (100) avec un deuxième élément structural (200) au moyen d'un rivet, dans lequel le rivet est fabriqué en matière plastique et présente un élément structural tubulaire (300), dans lequel le premier élément structural (100) présente une première surface (101) et le deuxième élément structural (200) présente une deuxième et une troisième surface (202, 203), dans lequel la première surface (101) du premier élément structural (100) et la deuxième surface (202) du deuxième élément structural (200) sont adjacentes l'une à l'autre, et le deuxième élément structural (200) présente une première ouverture (201) entre la deuxième et la troisième surface (202, 203), dans lequel le rivet tubulaire présente un élément structural tubulaire (300) pourvu d'une paroi latérale (310), d'une cavité (350) et d'une première extrémité (301) et d'une deuxième extrémité (302), dans lequel l'élément structural tubulaire (300) est inséré à travers l'ouverture (201) et fait ainsi saillie avec sa deuxième extrémité (302) à partir de la troisième surface (203) du deuxième élément structural,
**caractérisé en ce que** la paroi latérale (310) de l'élément structural tubulaire (300) est chauffée par le côté au moyen d'au moins un laser (500) au-dessus et à proximité de la troisième surface (103) du premier élément structural (100) et uniquement au-dessous de la deuxième extrémité (302) le long de sa circonférence pour la plastification, et ensuite l'élément structural tubulaire (300) est refoulé à partir de sa deuxième extrémité (302) au moyen d'un outil de façonnage (400) de telle sorte que la matière refoulée du rivet forme une zone bombée (320) qui entre partiellement en contact avec la troisième surface (203) du deuxième élément structural (200), et la paroi latérale (310) à la deuxième extrémité (302) de l'élément structural tubulaire (300) conserve sa forme d'origine.

8. Procédé selon la revendication 7, **caractérisé en ce que** la matière plastique contient des particules de suie.

9. Procédé selon la revendication 7 ou 8, **caractérisé en ce que** l'outil de façonnage (400) présente un mandrin (401) qui est guidé dans la cavité (350) de l'élément structural tubulaire (300).

10. Procédé selon la revendication 9, **caractérisé en ce que** le mandrin (401) est introduit dans la cavité (350) de l'élément structural tubulaire (300) avant chauffage.

11. Procédé selon l'une quelconque des revendications 7 à 10, **caractérisé en ce que** le laser (500) et le rivet sont déplacés l'un par rapport à l'autre.

12. Procédé selon l'une quelconque des revendications 7 à 11, **caractérisé en ce qu'**au moins deux lasers (500) par rivet sont utilisés pour la plastification.

13. Procédé selon l'une quelconque des revendications 7 à 12, **caractérisé en ce que** l'élément structural tubulaire (300) est configuré comme une partie du premier élément structural (100).

14. Procédé selon l'une quelconque des revendications 7 à 12, **caractérisé en ce qu'**une tête de rivet sous la forme d'une zone bombée (320) est réalisée au niveau de la première extrémité (301) de l'élément structural tubulaire (300) ou d'un prolongement (303) de l'élément structural tubulaire (300).
